# EUROPÄISCHE PATENTSCHRIFT

(11) **EP 0 962 278 B1**
(45) Veröffentlichungstag und Bekanntmachung des Hinweises auf die Patenterteilung: **10.04.2002**
(21) Anmeldenummer: 99110609.7
(22) Anmeldetag: 02.06.1999
(51) Int. Cl.: B23K 26/00

(54) **Laserschneidanlage mit Sicherheitsabschirmvorrichtung**
Laser cut installation with security protection device
Installation de coupage au laser avec dispositif de protection de sécurité

(30) Priorität: 04.06.1998 DE 29809988 U
(43) Veröffentlichungstag der Anmeldung: 08.12.1999
(73) Patentinhaber: ESAB-HANCOCK GmbH, D-61184 Karben (DE)
(72) Erfinder: Schäfer, Rainer, 35085 Ebsdorfergrund (DE)
(74) Vertreter: Schubert, Siegmar, Dipl.-Ing.

(56) Entgegenhaltungen:
- DE-U- 29 716 008
- US-A- 3 828 159
- US-A- 4 672 172
- PATENT ABSTRACTS OF JAPAN vol. 1997, no. 03, 31. März 1997 (1997-03-31) & JP 08 290284 A (IIDA KOGYO KK), 5. November 1996 (1996-11-05)

## Beschreibung

Die Erfindung betrifft eine Laserschneidanlage mit Sicherheitsabschirmvorrichtung nach dem Oberbegriff des Anspruchs 1.

Eine solche, zum Beispiel von dem DE-U-297 16 008 bekannte Laserschneidanlage wird zum Laserstrahlbrennschneiden oder zum Laserstrahlschmelzschneiden eingesetzt. Sie umfaßt generell ein Maschinenportal, bestehend aus zwei im Abstand zueinander angeordneten Seitenwangen, zwischen denen ein Querträger angeordnet ist. Der Portalwagen ist auf zwei im Abstand zueinander angeordneten Schienen als Laufbahnen in deren Längsrichtung verfahrbar. (Diese Längsrichtung der Schienen bzw. Laufbahnen wird im folgenden generell nur mit Längsrichtung bezeichnet.) Quer dazu ist an dem Querträger des Maschinenportals ein Querwagen, der auch als Führungswagen bezeichnet wird, verfahrbar. An dem Führungswagen befindet sich ein Laserschneidkopf mit Fokussieroptik, der im allgemeinen im wesentlichen nach unten gerichtet ist. In dem Falle, in dem es sich nicht um einen Geradeschneider handelt, bei dem der Laserschneidkopf vertikal fest an dem Querwagen angebracht ist, sondern um einen beweglichen Laserstrahlkopf zum Schrägschneiden für die Schweißkantenvorbereitung, kann der Laserschneidkopf wenig geneigte Stellungen bis zur horizontalen Stellung einnehmen. Um einen unerwünschten Austritt des Laserstrahls aus der Laserschneidanlage zu verhindern, der das Bedienungspersonal gefährden könnte, wird der Laserstrahl von einer Laserquelle, die mit dem Maschinenportal mitbewegt wird, durch eine gekapselte Laserstrahlführung und Umlenkspiegel in Querrichtung und von oben in den Laserschneidkopf mit Fokussieroptik gelenkt und nach Austritt aus der Fokussieroptik ungekapselt auf das zu schneidende Werkstück gerichtet. Dabei kann es zu Reflexionen des Laserstrahls kommen. Aus Sicherheitsgründen für das Personal in der Umgebung der Laserschneidanlage und wegen entsprechender gesetzlicher Vorschriften besteht ein erhebliches Bedürfnis, die reflektierten Laserstrahlen von der Umgebung der Laserschneidanlage fernzuhalten. Dazu dient nach obigem Gebrauchsmuster eine Sicherheitsabschirmvorrichtung, die im wesentlichen in einer Schutzhaube besteht, die an dem Maschinenportal mit diesem zusammen verfahrbar angebracht ist. Die Schutzhaube soll wegen der mit dem Portalwagen zu bewegenden Masse und der Zugänglichkeit der Laserschneidanlage und ihres Arbeitsbereichs zur Auflage der zu schneidenden Werkstücke möglichst klein gehalten werden. Wegen dieser Forderung besteht die Wand der Schutzhaube bevorzugt aus einem Schutzwandmaterial, welches eine lange Standzeit gegenüber Laserstrahlen aufweist und welches gemäß DE 196 29 037 C1 insbesondere eine dem Arbeitsbereich der Laserquelle benachbarte metallische Innenwand und eine zu ihr parallelen metallischen Außenwand aufweist, wobei die zum Arbeitsbereich weisende Seite der Innenwand eine Beschichtung hohen Absorptionsvermögens aufweist und die der Innenwand zugewandte Seite der Außenwand ein demgegenüber geringeres Absorptionsvermögen hat. Es kann dann der defokussierte Laserstrahl sehr nahe an der Schutzwand vorbeigeführt werden. - Zur Erfüllung der Anforderung, daß niemand im Umfeld einer Laserschneidanlage gefährdet werden soll, ist, wie bekannt, das Verhalten des Laserstrahls hinter dem Fokussierpunkt in einem Freibereich und nicht nur an der Bearbeitungsstelle (Zeitschrift LASER 2-1998, Seiten 12 - 15) wichtig, das zu annähernd parallelen Reflexionsstrahlen führt. Aus Sicherheitsgründen bestand bereits die Forderung, daß auf einem nicht voll belegten Arbeitstisch bzw. Schneidtisch der Laserschneidanlage offenstehende Flächen abzudecken und verschachtelte Brennteile durch Brennbrücken miteinander verbunden zu lassen sind, um vagabundierende Strahlung zu verhindern (Betriebsanleitung "ALPHAREX"). Übliche Arbeitstische bestehen aus parallel zueinander quer zur Längsrichtung bzw. Laufrichtung des Maschinenportals orientierten vertikalen Auflagestegen, auf denen die zu schneidenden Metallplatten bzw. Brennteile aufliegen. Herausgeschnittene, nicht miteinander zusammenhängende Brennteile können zwischen den Auflagestegen hindurch in eine Wanne in einem unteren Bereich des Arbeitstisches fallen, die herabfallende Teile und Schlacke aufnimmt. Dabei sind übliche Auflagestege nur geeignet, die Funktion zu erfüllen, zu bearbeitende Metallplatten bzw. Brennteile zu halten.

Der Erfindung liegt die Aufgabe zugrunde, eine Laserschneidanlage mit Sicherheitsabschirmvorrichtung der eingangs genannten Gattung so weiterzubilden, um auch bei offenen Flächen auf dem Arbeitstisch, wenn dieser insbesondere nicht vollständig mit Brennteilen belegt oder durch die Schutzhaube abgedeckt ist, mit unkomplizierten Mitteln einen verbesserten Laserschutz der Umgebung der Laserschneidanlage zu erreichen.

Diese Aufgabe wird gemäß dem kennzeichnenden Teil des Anspruchs 1 dadurch gelöst, daß an dem Arbeitstisch unter den Auflagestegen Abschirmstege angebracht sind, die parallel zueinander quer zur Längsrichtung orientiert sind. Diese Abschirmstege sind hier also zusätzlich zu den normalen Auflagestegen vorgesehen und können sich insbesondere an diese nach. unten anschließen. Es braucht jedoch nicht jedem Auflagesteg ein Abschirmsteg und umgekehrt zu entsprechen. Diese Anordnung der Abschirmstege geht unter anderem von der Erkenntnis aus, daß für den Austritt von Laserstrahlen aus dem nicht abgedeckten Arbeitstisch zwischen den Auflagestegen hindurch Reflexionsstrahlen ursächlich sind, die, von dem Laserschneidkopf bzw. der Bearbeitungsstelle ausgehend, von dem unteren Bereich des Arbeitstisches nach oben reflektiert werden. Erfindungsgemäß übernehmen die feststehenden vertikalen Abschirmstege die Abschirmung der Umgebung vor Laserstrahlen in dem Bereich über dem Arbeitstisch, der nicht durch die sich über dem Arbeitstisch befindliche, nach unten offene Schutzhaube abgedeckt ist. Die Schutzhaube kann deswegen unabhängig von den sonst von unten durch die Auflagestege austretenden Reflexionsstrahlen verhältnismäßig klein dimensioniert werden. Da sich die Abschirmstege tiefer als die Auflagestege der Brennteile befinden, werden sie durch den Laserstrahl von oben nicht zerstört. Sie sind also ohne weiteres langfristig wirksam. Die Abschirmstege sind auch deswegen eine unkomplizierte Ergänzung der Schutzhaube als Sicherheitsabschirmvorrichtung, weil sie im Unterschied zu der Schutzhaube fest eingebaut sind und nicht zusammen mit dem Portalwagen bewegt: zu werden brauchen.

Gemäß Anspruch 2 weisen die Abschirmstege jeweils eine so große Höhenabmessung auf und sind in einem so geringen Abstand zueinander angeordnet, daß von dem Laserschneidkopf ausgehende, von unten reflektierte Reflexionsstrahlen außerhalb der Bedeckung des Arbeitstisches durch die Schutzhaube nicht nach oben aus dem Arbeitstisch austreten. Die Höhenabmessungen der Abschirmstege lassen sich so flexibel an die jeweiligen Gegebenheiten der Laserschneidanlage anpassen. Demgemäß können auch weniger Abschirmstege in Längsrichtung als Auflagestege zum Erzielen einer sicheren Abschirmwirkung ausreichen, wenn die Höhenabmessung der Abschirmstege entsprechend groß ist.

Gemäß Anspruch 3 zeichnen sich die Abschirmstege zur Erfüllung der Abschirmfunktion durch ein größeres Verhältnis der Höhenabmessung zu deren gegenseitigem Abstand aus als die Auflagestege.

Bevorzugt ist dabei die Höhenabmessung der Abschirmstege gemäß Anspruch 4 größer als diejenige der Auflagestege. Es ist also nicht erforderlich, eine so große Anzahl Abschirmstege einzubauen wie Auflagestege, deren gegenseitiger Abstand von deren Aufgabe bestimmt wird, auch kleinere Brennteile zu halten und nicht durchfallen zu lassen.

Gemäß Anspruch 5 können sich zumindest einige der Abschirmstege an einzelne der Auflagestege unten direkt anschließen. Dies ermöglicht eine sichere Befestigung der Abschirmstege und eine lückenlose Abschirmwirkung an der Übergangsstelle zu den Auflagestegen.

Es ist gemäß der Variante nach Anspruch 6 auch denkbar, bei fehlenden separaten Abschirmstegen die Höhenabmessung der Auflagestege und deren gegenseitigen Abstand so zu dimensionieren, daß die Auflagestege zugleich die Funktion von Abschirmstegen haben, die verhindert, daß von dem Laserschneidkopf ausgehende, von unten reflektierte Reflexionsstrahlen außerhalb der Bedeckung des Arbeitstisches, die insbesondere durch die Schutzhaube erfolgen kann, nach oben aus dem Arbeitstisch austreten. Diese Variante hat aber den Nachteil, daß die Auflagestege in ihrem obersten Bereich durch den Laserstrahl zerschnitten werden können, wonach die gesamten großflächigen Auflagestege gegebenenfalls zu erneuern und die Auflagestege in einem so engen Abstand anzuordnen sind, daß sie ihre Hauptabstützfunktion erfüllen können. Die Möglichkeit, die separaten Abschirmstege aus einem anderen Material als dem Material der Auflagestege herzustellen, ist bei der Variante nach Anspruch 6 nicht ohne weiteres gegeben.

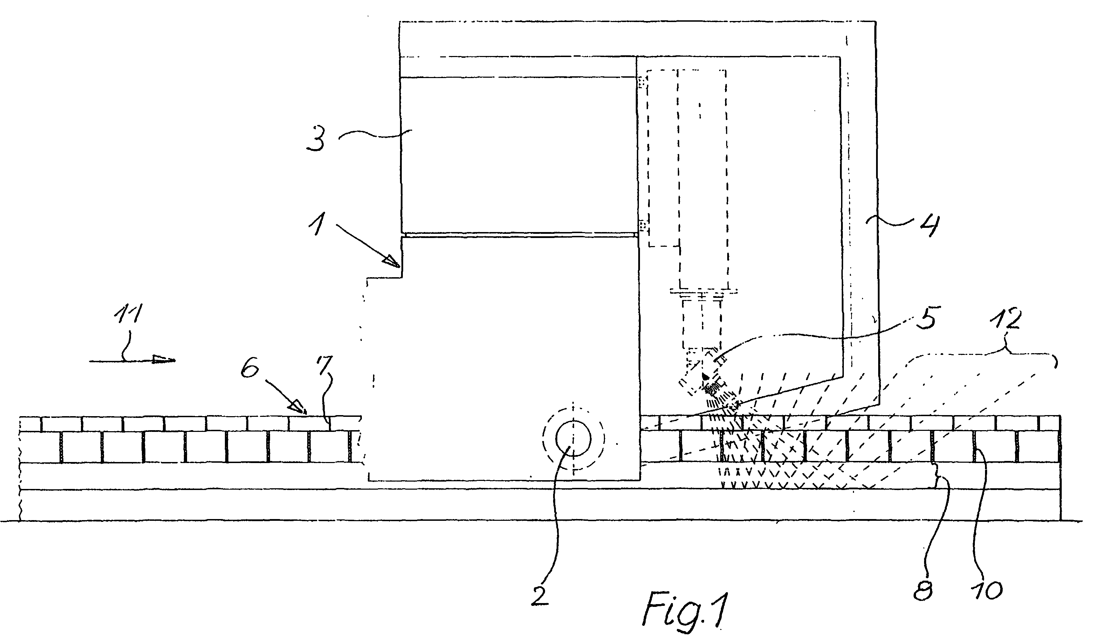

Weitere Merkmale und Vorteile gehen aus der nachfolgenden Beschreibung eines Ausführungsbeispiels der Erfindung anhand einer Zeichnung hervor, in deren
- Fig. 1: eine Laserschneidanlage in einem seitlichen Schnitt dargestellt ist.

In der Zeichnung ist mit 1 allgemein ein Maschinenportal bezeichnet, dessen hinterer Abschnitt nicht dargestellt ist. Das Maschinenportal ist mittels Laufrädern, von denen das Laufrad 2 zu sehen ist, auf zwei parallelen Schienen als Führungsbahnen in Längsrichtung (X-Richtung) verfahrbar. An dem Maschinenportal 1 ist ein Rahmen 4 einer Schutzhaube befestigt, die einen an einem Querträger gelagerten Laserschneidkopf 5 mit Fokussieroptik seitlich und nach vorne mit einer gegen Laserstrahlen widerstandsfähigen Wand einschließt, jedoch nach unten zu dem Arbeitsbereich des Laserschneidkopfs sowie nach oben offen ist. Der Laserschneidkopf 5 ist an einem bei 3 angedeuteten Querwagen angebracht, der auf einem nicht dargestellten Querträger quer zur Längsrichtung (d.h. in y-Richtung) verfahrbar geführt ist.

Das Maschinenportal kann zusammen mit der Schutzhaube und dem Laserschneidkopf 5 über einem Arbeitstisch verfahren werden, der mit 6 bezeichnet ist. Der Arbeitstisch weist auf seiner Oberseite eine Anordnung zueinander parallel vertikaler Auflagestege quer zur Längsrichtung 11 auf, von denen einer mit 7 bezeichnet ist. In einem unteren Bereich 8 des Arbeitstisches kann sich eine nicht dargestellte Wanne als Aufnahme herabfallender Teile und von Schlacke befinden. In der Zeichnung erkennbar ist ferner ein parallel zu den Schienen verlaufender Absaugkanal, mit dem die während des Schneidens entstehenden Dämpfe und Gase abgesaugt werden.

Wie im einzelnen aus Fig. 1 ersehen werden kann, schließen sich an die Anordnung der parallelen Auflagstege 7 nach unten Abschirmstege an, von denen ebenfalls nur einer mit 10 bezeichnet ist.

Die Abschirmstege 10 sind wie die Auflagestege 7 vertikal und quer zur Längsrichtung 11 in dem Arbeitstisch 6 befestigt. Dabei liegen sie in parallelen Ebenen zu den Auflagestegen 7. Wie aus der Zeichnung weiter ersichtlich ist, ist die Höhenabmessung der Abschirmstege wesentlich größer als diejenige der Auflagestege. Deswegen können die Abschirmstege in einem größeren Abstand in Längsrichtung 11 zueinander angeordnet sein und dabei eine größere Abschirmwirkung erzielen als die Auflagestege mit typisch geringer Höhenabmessung.

Wie aus Fig. 1 weiter ersichtlich, können aufgrund der Abmessungen der Abschirmstege und deren gegenseitigem Abstand von dem Laserschneidkopf ausgehende, von unten reflektierte Reflexionsstrahlen, die in gefährdender Weise Parallelstrahlen sein können, nach oben außen nur innerhalb der Schutzhaube, die den Rahmen 4 seitlich und vorne dicht einschließt, durchgelassen werden. Durch die Schutzhaube und Seitenwände der Anlage werden Laserstrahlen nach außen abgeschirmt, die, von dem Laserschneidkopf ausgehend, von unten seitlich, d.h. im wesentlichen in Querrichtung reflektiert werden. Nicht dagegen können Laserstrahlen außerhalb des Abdeckungsbereichs der Schutzhaube aus dem Arbeitstisch 6 nach oben austreten, was insbesondere bei den mit der Klammer 12 zusammengefaßten gedachten Verlängerungen der Reflexionsstrahlen gilt.

Es kann zweckmäßig sein, den vorderen Bereich des Tisches zu verlängern, damit die unten offene Schutzhaube, die von dem Rahmen 4 getragen wird, nicht über das Ende des Arbeitstisches herausragen kann und keine Laserstrahlen aus der Schutzhaube nach unten in die Umgebung der Laserschneidanlage austreten können.

## Patentansprüche

1. Laserschneidanlage mit Sicherheitsabschirmvorrichtung mit einem über mindestens einen Arbeitstisch in Längsrichtung verfahrbaren Maschinenportal mit einem an einem Querträger des Maschinenportals verfahrbaren Querwagen, der einen Laserschneidkopf mit Fokussieroptik aufweist, sowie mit einer Schutzhaube als Sicherheitsabschirmvorrichtung, die an dem Maschinenportal zusammen mit diesem verfahrbar angebracht ist, wobei der Arbeitstisch insbesondere parallel zueinander quer zur Längsrichtung orientierte vertikale Auflagestege aufweist,
**dadurch gekennzeichnet,**
**daß** an dem Arbeitstisch (6) unter den Auflagestegen (7) in parallelen Ebenen zu diesen angeordnete vertikale Abschirmstege (10) angebracht sind, die parallel zueinander quer zur Längsrichtung (11) orientiert sind.

2. Laserschneidanlage nach Anspruch 1,
**dadurch gekennzeichnet,**
**daß** die Abschirmstege (10) jeweils eine so große Höhenabmessung aufweisen und in einem so geringen Abstand zueinander angeordnet sind, daß von dem Laserschneidkopf (5) ausgehende, von unten reflektierte Reflexionsstrahlen außerhalb der Bedeckung des Arbeitstisches (6) durch die Schutzhaube nicht nach oben aus dem Arbeitstisch (6) austreten.

3. Laserschneidanlage nach Anspruch 1 oder 2,
**dadurch gekennzeichnet,**
**daß** das Verhältnis der Höhenabmessung der Abschirmstege (10) zu deren gegenseitigem Abstand größer als das Verhältnis der Höhenabmessung der Auflagestege (7) zu deren gegenseitigem Abstand ist.

4. Laserschneidanlage nach einem der Ansprüche 1 - 3,
**dadurch gekennzeichnet,**
**daß** die Höhenabmessung der Abschirmstege (10) größer als diejenige der Auflagestege (7) ist.

5. Laserschneidanlage nach einem der vorangehenden Ansprüche,
**dadurch gekennzeichnet,**
**daß** sich zumindest einige der Abschirmstege an einzelne der Auflagestege unten direkt anschließen.

6. Laserschneidanlage nach Anspruch 1,
**dadurch gekennzeichnet,**
**daß** bei fehlenden separaten Abschirmstegen die Höhenabmessung der parallel zueinander quer zur Längsrichtung orientierten Auflagestege und deren gegenseitiger Abstand so dimensioniert sind, daß diese zugleich die Funktion von Abschirmstegen haben, die verhindert, daß von dem Laserschneidkopf ausgehende, von unten reflektierte Reflexionsstrahlen außerhalb der Bedeckung des Arbeitstisches insbesondere durch die Schutzhaube nach oben aus dem Arbeitstisch austreten.

## Claims

1. Laser cutting unit having a safety screen device with a mechanical gantry that can move over at least one workbench in the longitudinal direction with a transverse carriage that can move on a transverse support member of the mechanical gantry, which comprises a laser cutting head with focusing optics, and having a protective hood as a safety screen device, which is attached to the mechanical gantry and can move with it, the workbench having vertical support webs orientated in particular parallel to one another and transversely to the longitudinal direction,
**characterised in that**
vertical screening webs (10) are attached to the workbench (6) arranged under the support webs (7) in planes parallel to these, which are orientated parallel to one another and transversely to the longitudinal direction (11).

2. Laser cutting unit according to Claim 1,
**characterised in that**
the height of the screening webs (10) and their arrangement a small enough distance apart are such that reflected beams coming from the laser cutting head (5) and reflected from below do not emerge outside the cover of the workbench (6) through the protective hood and upwards out of the workbench (6).

3. Laser cutting unit according to Claims 1 or 2,
**characterised in that**
the ratio between the height of the screening webs (10) and their mutual separation is larger than the ratio between the height of the support webs (7) and their mutual separation.

4. Laser cutting unit according to any of Claims 1 to 3,
**characterised in that**
the height of the screening webs (10) is greater than that of the support webs (7).

5. Laser cutting unit according to any of the preceding claims,
**characterised in that**
at least some of the screening webs are directly under particular support webs.

6. Laser cutting unit according to Claim 1,
**characterised in that**
when separate screening webs are missing, the height of the support webs orientated parallel to one another transversely to the longitudinal direction and their mutual separation are such that these also act as screening webs, which prevent reflected beams coming from the laser cutting head and reflected from below from emerging outside the cover of the workbench and in particular through the protective hood and upwards out of the workbench.

## Revendications

1. Installation de découpe au laser avec un dispositif à écran de sécurité pourvue d'un portique machine susceptible d'être déplacé suivant une direction longitudinale au dessus d'au moins une table de travail ; le chariot transversal pouvant être déplacé sur un support transversal du portique machine et présentant une tête de découpe au laser avec une optique de focalisation ; un capot de protection étant disposé en tant que dispositif à écran de protection sur le portique machine et pouvant être déplacé avec celui-ci ; la table de travail présentant notamment des tiges supports parallèles entre elles orientées verticalement en travers de la direction longitudinale, **caractérisé en ce que** des tiges de protection (10) verticales sont disposées sur la table de travail (6) sous les tiges supports (7) suivant des plans parallèles à celles-ci qui sont orientées parallèlement entre elles transversalement à la direction longitudinale (11).

2. Installation de découpe au laser selon la revendication 1, **caractérisé en ce que** les tiges de protection (10) présentent chaque fois une hauteur très élevée et sont disposées à de distances très faibles l'une par rapport à l'autre ce qui empêche que des rayons de réflexion sortant de la tête de découpe au laser (5) et réfléchis par le bas de sortir vers le haut en dehors de la table de travail (6) et en dehors de la couverture par le capot de protection de la table de travail (6).

3. Installation de découpe au laser selon la revendication 1 ou 2, **caractérisé en ce que** les hauteurs des tiges de protection (10) par rapport à leurs distances mutuelles sont supérieures aux hauteurs des tiges de support (7) par rapport à leurs distances mutuelles .

4. Installation de découpe au laser selon la revendication 1 ou 3, **caractérisé en ce que** la hauteur des tiges de protection (10) est supérieure à celle des tiges de support (7).

5. Installation de découpe au laser selon une des revendications précédentes , **caractérisé en ce qu'**au moins quelques tiges de protection sont reliées directement en bas de quelques tiges de support .

6. Installation de découpe au laser selon la revendication 1, **caractérisé en ce qu'**en cas d'absence de tiges de protection séparées la hauteur des tiges de support orientées parallèlement entre elles transversalement en direction longitudinale et dont la distance mutuelle est dimensionnée de manière, à ce que ces tiges de supports aient simultanément la fonction de tiges de protection empêchant les rayons de réflexion sortant de la tête de découpe au laser et réfléchis par le bas de sortir vers le haut en dehors de la table de travail et en dehors de la couverture par le capot de protection de la table de travail.
